# EUROPEAN PATENT SPECIFICATION

(11) **EP 2 025 500 B1**
(45) Date of publication and mention of the grant of the patent: **08.08.2012**
(21) Application number: 07743834.9
(22) Date of filing: 22.05.2007
(51) Int. Cl.: B29D 30/30

(54) **METHOD OF PRODUCING PNEUMATIC TIRE**
VERFAHREN ZUR HERSTELLUNG EINES LUFTREIFENS
PROCÉDÉ DE PRODUCTION D'UN BANDAGE PNEUMATIQUE

(30) Priority: 26.05.2006 JP 2006146631
(43) Date of publication of application: 18.02.2009
(73) Proprietor: The Yokohama Rubber Co., Ltd., Minato-ku Tokyo 105-8685 (JP)
(72) Inventor: SAWADA, Takahiko, Hiratsuka-shi Kanagawa 254-8601 (JP)
(74) Representative: HOFFMANN EITLE
(86) International application number: PCT/JP2007/060400
(87) International publication number: WO 2007/138918

(56) References cited:
- DE-U1- 8 813 969
- JP-A- 4 118 302
- JP-A- 4 247 933
- JP-A- 04 019 131
- JP-A- 04 067 941
- JP-A- 04 101 835
- JP-A- 04 247 933
- JP-A- 05 220 866
- US-A- 5 062 462

## Description

### TECHNICAL FIELD

The present invention relates to a method of producing a pneumatic tire.

### BACKGROUND ART

In a tubeless pneumatic tire, the inner surface of the tire is lined integrally with an air permeation prevention layer (an inner liner), and a butyl rubber excellent in air non-permeability is used as a material for the air permeation prevention layer. However, although there is an increasing demand for a reduction in weight of pneumatic tires, it has been difficult to achieve the reduction in weight when using the butyl rubber because the butyl rubber has a large specific gravity. In this respect, Japanese patent application Kokai publication No. Hei 8-258506 proposes the use of a thermoplastic resin film having a small specific gravity as an air permeation prevention layer instead of such butyl rubber so as to enable the reduction in weight of a pneumatic tire.

However, the thermoplastic resin film has no such air absorbability as the butyl rubber has. For this reason, a problem arises in that, if air is trapped in an uncured tire in the forming of the uncured tire, the trapped air leads to occurrence of blisters in an inner surface of the thermoplastic resin film after a curing process.

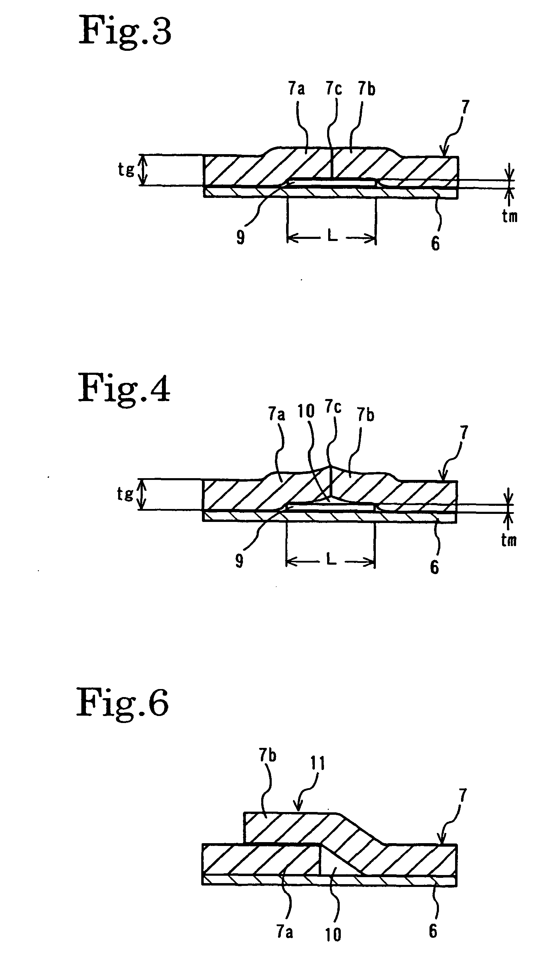

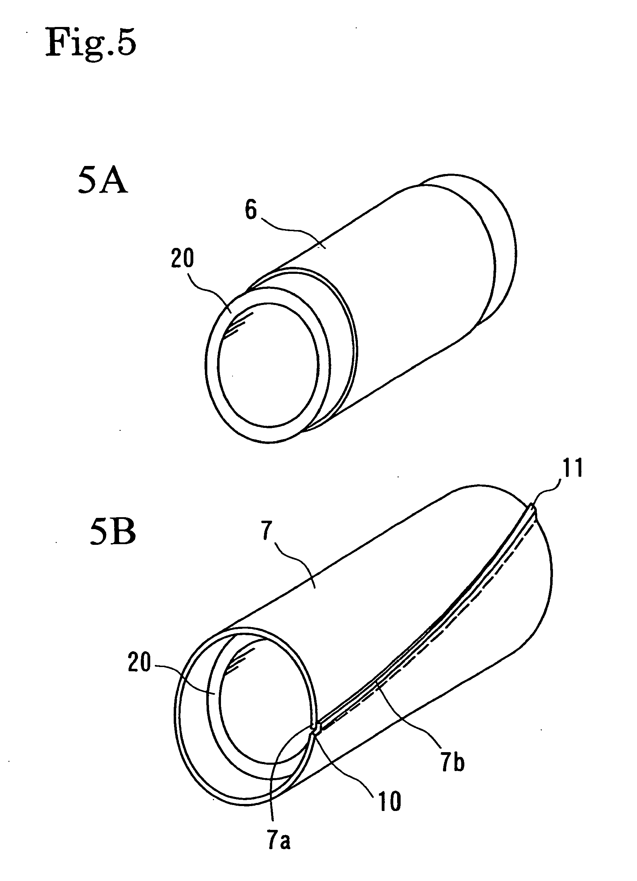

A green tire before a curing process is formed as follows. A cylindrical thermoplastic resin film 6 is first wrapped around a making drum 20 as shown in Part 5A of Fig. 5. Subsequently, a tie-rubber sheet 7 is wound on the thermoplastic resin film 6 by one round as shown in Part 5B of Fig. 5. Thereafter, both end portions 7a and 7b of the tie-rubber sheet 7 are overlapped with each other to form a step-like lap-spliced portion 11. The lap-spliced portion 11 forms, as shown in Fig. 6, a void 10 of trapped air having a triangular cross-sectional shape. The void 10 can be absorbed when the inner liner is made of a butyl rubber. However, when the inner liner is made of a thermoplastic resin film, such void 10 of trapped air brings about a problem that blisters occur during a curing process because the thermoplastic resin film has no air absorbability. In addition, there arise other problems. Because of its step-like shape, the lap-spliced portion 11 deteriorates the uniformity. Moreover, because the step-like lap-spliced portion 11 has a high stiffness, stress is concentrated in a vicinity of the step-like portion when a green tire is lifted up for curing the green tire. The stress concentration causes the thermoplastic resin film 6 to become locally thinner, so that the durability is deteriorated.

Particularly, consider a case of tires, such as heavy-duty tires, in which a carcass lifting caused during a curing process is so large that an inner liner is likely to bite into carcass cords constituting a carcass layer. In this case,
because a tie-rubber sheet needs to be formed with a large thickness in order to prevent the biting, such tires have a problem that the aforementioned failure due to the lap splice of the tie-rubber sheet is more likely to occur.
JP 4118302 A describes a pneumatic tubeless tire which comprises an inner liner, a tie-rubber layer and a carcass layer. The tie-rubber layer is arranged between the inner liner and the carcass layer. The inner liner has a splice part and the tie-rubber layer has another splice part. Projection parts of the are reduced by stepping edge parts of the inner liner and tie-rubber layer in the tire peripheral direction and by splicing the edge parts of the same kind of rubber layers.
A vehicle tire with reinforcing inserts of cord fabrics which use inserts of fabric segments which may cut one another and may be hold in place by an overlay fabric strip is described in DE 88 13 969 U1. The fabric segments abut one another and a strip is attached over the joint butt.
US 5 062 462 A describes a pneumatic tire made by butt splicing structural members and a method therefore. In the method, after a butt splice is made, a spun-bonded material is applied to the splice area as a splicing strip.
A joint tape which is attached to a joint part of an inner liner is disclosed in JP 4247933 A.

### SUMMARY OF THE INVENTION

A method of producing a pneumatic tire according to the present invention includes: wrapping a thermoplastic resin film around a making drum; winding an unvulcanized tie-rubber sheet on the thermoplastic resin film; splicing a winding start portion and a winding end portion of the tie-rubber sheet with each other; and thereafter winding a carcass layer on the tie-rubber sheet. The method is characterized in that a splice of the tie-rubber sheet is made to be a butt-splice, and an unvulcanized auxiliary rubber sheet is interposed between the tie-rubber sheet and the thermoplastic resin film, along a joint of the butt-splice, and a thickness of the tie-rubber sheet is in a range from 1.0 mm to 4.0 mm. Particular embodiments of the invention are the subject of the dependent claims.

The method of producing a pneumatic tire according to the present invention provides the following effects. In the method, when the tie-rubber sheet is wound on the thermoplastic resin film and the end portions of the tie-rubber sheet are spliced, the splice of the end portions of the tie-rubber sheet is made to be the butt-splice. Accordingly, no step is formed, so that the size of a void of trapped air is reduced to the minimum, thus preventing occurrence of blisters. This makes it possible to solve a problem of a reduction in durability of the tire which is caused by an event that the thermoplastic resin film is locally thinned by stress concentration, and also to improve the uniformity of the tire. Moreover, in the method, the unvulcanized auxiliary rubber sheet is interposed between the joint of the butt-splice of tie-rubber sheet and the thermoplastic resin film. Accordingly, the auxiliary rubber sheet prevents the joint from opening, and also absorbs air even if a void is formed at the joint, thus eliminating occurrence of blisters.

An advantage obtainable with embodiments of the present invention is to provide a method of producing a pneumatic tire, the method improving the uniformity and durability of the tire and preventing occurrence of blisters caused by trapped air, when a thermoplastic resin film is used as an air permeation prevention layer, and particularly, the present invention relates to a method suitable for producing a heavy-duty pneumatic tire.

### BRIEF DESCRIPTION OF THE DRAWINGS

To enable a better understanding of the present application, and to show how the same may be carried out into effect, reference is now made, by way of example only, to the accompanying drawings, in which:
Fig. 1 is a half cross-sectional view taken in a tire meridian direction, and showing an example of an embodiment of a pneumatic tire produced according to the present invention;
Fig. 2 shows an example of a process of forming a green tire by using a drum in the method of producing a pneumatic tire according to the present invention; part 2A of Fig. 2 is an explanatory view of a process of winding a thermoplastic resin film, and Part 2B thereof is an explanatory view of a process of winding a tie-rubber sheet;
Fig. 3 is a partially enlarged view of a cross-sectional view taken in a drum axial direction, and showing an example of a spliced portion obtained in the process shown in Fig. 2;
Fig. 4 is a partially enlarged view of a cross-sectional view taken in the drum axial direction, and showing another example of a spliced portion obtained in the process shown in Fig. 2;
Fig. 5 shows an example of a process of forming a green tire by using the drum in a conventional method of producing a pneumatic tire; part 5A of Fig. 5 is an explanatory view of a process of winding a thermoplastic resin film, and Part 5B thereof is an explanatory view of a process of winding a tie-rubber sheet; and
Fig. 6 is a partially enlarged view of a cross-sectional view, taken in the drum axial direction, of a spliced portion obtained in the process shown in Fig. 5.

### DETAILED DESCRIPTION OF PREFERRED EMBODIMENTS OF

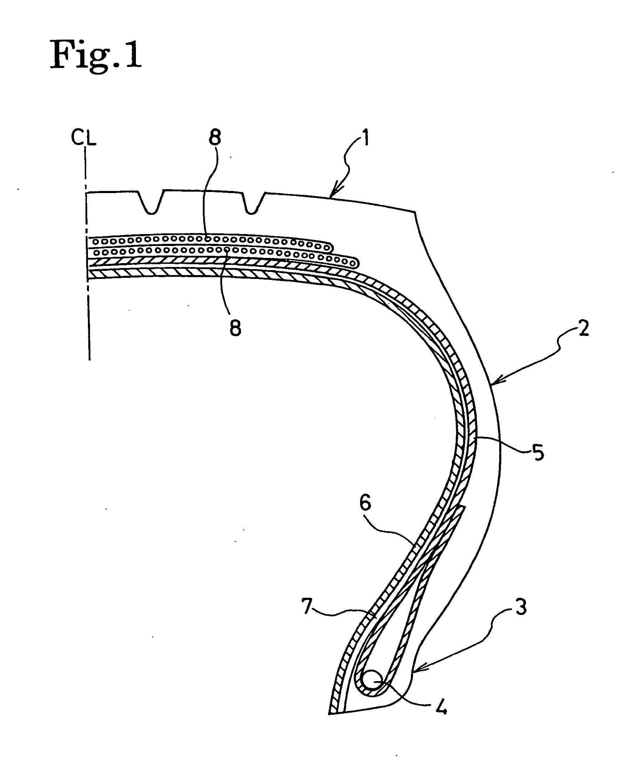

Fig. 1 is a half cross-sectional view taken in a tire meridian direction, and showing an example of an embodiment of a heavy-duty pneumatic tire as a pneumatic tire produced according to the present invention.

In Fig. 1, reference numeral 1 denotes a tread portion, 2 denotes sidewall portions, and 3 denotes bead portions. A carcass layer 5 is laid between a pair of right and left bead cores 4 buried respectively in the bead portions 3. Each of both end portions of the carcass layer 5 is folded back around the corresponding bead core 4 from the inside to the outside of the tire. In the tread portion 1, a pair of upper and lower belt layers 8 are disposed on the outer side of the carcass layer 5 over the entire round of the tire. A cylindrical thermoplastic resin film 6 is attached as an air permeation prevention layer to the innermost side of the pneumatic tire. A tie-rubber sheet 7 serving as an adhesive layer is disposed between the thermoplastic resin film 6 and the carcass layer 5.

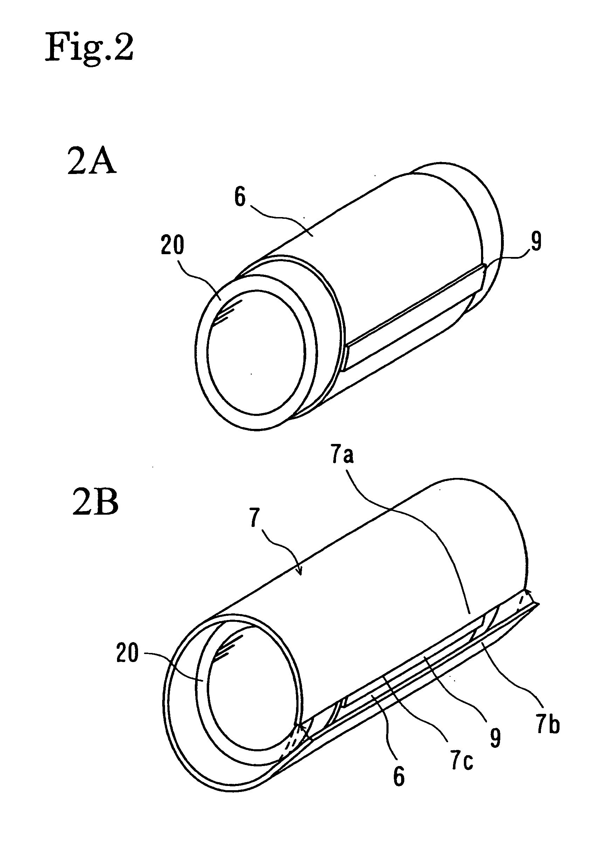

In the method of producing a pneumatic tire having the above-described structure, a green tire before a curing process may be formed as follows. As shown in Part 2A of Fig. 2, the thermoplastic resin film 6 is first wrapped as an inner liner around a making drum 20, and a thin unvulcanized auxiliary rubber sheet 9 is disposed thereon. Subsequently, as shown in Part 2B of Fig. 2, the tie-rubber sheet 7 having approximately the same length as the outer circumferential length of the thermoplastic resin film 6 is used. The tie-rubber sheet 7 is wound in a tire circumferential direction in such a way that a winding start portion 7a of the tie-rubber sheet 7 is bonded to cover about a half of the width, in the circumferential direction, of the auxiliary rubber sheet 9. Then, a winding end portion 7b of the tie-rubber sheet 7 is bonded to the other half of the width of the auxiliary rubber sheet 9, and also is butt-spliced to the winding start portion 7a. In this way, at the butt-spliced portion of the tie-rubber sheet 7, the auxiliary rubber sheet 9 is interposed between a joint 7c and the thermoplastic resin film 6, as shown in Fig. 3.

In the method of winding the tie-rubber sheet 7 shown as an example in Fig. 2, the auxiliary rubber sheet 9 is bonded in advance to the thermoplastic resin film 6. Alternatively, the auxiliary rubber sheet 9 may be first bonded to the winding start portion side of the tie-rubber sheet 7, and then the winding start portion of the tie-rubber sheet 7 and the auxiliary rubber sheet 9 may be wound simultaneously.

In the butt-splicing of the tie-rubber sheet 7, if the tie-rubber sheet 7 has been cut to have a circumferential length that coincides with the circumferential length of the thermoplastic resin film 6 with the thickness of the auxiliary rubber sheet 9 taken into account, a void of trapped air is scarcely formed in the butt-spliced portion. In actual practice, however, the circumferential length of the tie-rubber sheet 7 may vary due to a dimensional error at the time of cutting both end portions thereof. Moreover, the tie-rubber sheet itself may extend because stitching is performed on the joint in order to press and bond the end surfaces of the tie-rubber sheet to each other at the butt-splicing process, or because the tie-rubber sheet is hauled for the butt-splicing. Since the joint 7c is forced to thrust up as shown in Fig. 4, the formation of a small void 10 of trapped air is inevitable. However, the size of the void 10 formed by the.butt-splicing can be significantly reduced as compared with the case of lapsplicing.

In the present invention, stitching is preferably performed on an upper portion of the butt-spliced portion after the tie-rubber sheet is wound and butt-spliced. The stitching makes it possible to further reduce in size or even almost eliminate the void. After the tie-rubber sheet is wound, a carcass layer is wound therearound according to an ordinary method in the same manner as the conventional case. Then, bead cores are fitted thereon, and then, side rubbers are wound therearound to form a first green tire. Further, a tread rubber is wound around the outer periphery of the first green tire so as to form a second green tire. The second green tire is cured in the curing process, so that a product tire is produced.

The splice of the tie-rubber sheet may be made to be the butt-splice as described above, so that no step is formed in the spliced portion. Accordingly, since a void of trapped air is small in size or is hardly formed, occurrence of blisters can be prevented. In addition, since no step is formed, it is possible to avoid the thinning of the thermoplastic resin film in a vicinity of the spliced portion due to stress concentration caused by the lifting up during the curing process, and also to prevent the uniformity of the tire from being deteriorated. Moreover, interposing the auxiliary rubber sheet between the thermoplastic resin film and the joint of the butt-splice prevents the joint from opening, and also prevents occurrence of blisters because the auxiliary rubber sheet absorbs air even when a void of trapped air is formed.

In the present invention, the thickness (tg) of the tie-rubber sheet is preferably in a range from 1.0 mm to 4.0 mm, and more preferably 1.2 mm to 3.5 mm. In particular, if the thickness (tg) of the tie-rubber sheet is set at 1.2 mm or more, the thermoplastic resin film can be prevented from biting into carcass cords of the carcass layer during the curing process even in a heavy-duty tire. Moreover, the angle of an edge surface of the tie-rubber sheet to the thickness direction thereof is preferably in a range of ± 5°. Setting the angle of the edge surface in such a range makes it possible to further enhance the effect obtained by the interposing of the auxiliary rubber sheet.

The thickness (tm) of the auxiliary rubber sheet is preferably in a range from 0.1 mm to 0. 5 mm, and more preferably in a range from 0.2 mm to 0.4 mm. Setting the thickness (tm) of the auxiliary rubber sheet at 0.1 mm or more makes it possible to sufficiently obtain the effect of absorbing air during the curing process, thereby securing the reinforcement of the joint. Setting the thickness (tm) of the auxiliary rubber sheet at 0.5 mm or less makes it possible to reduce the amount of air trapped due to the step on the end portion of the auxiliary rubber sheet and thus to prevent occurrence of blisters, thereby reducing an influence on the weight and uniformity of the tire.

The circumferential length (L) of the auxiliary rubber sheet is preferably in a range from 10 mm to 20 mm. Setting the circumferential length (L) of the auxiliary rubber sheet at 10 mm or more makes it possible to sufficiently obtain the effect of absorbing air during the curing process and the effect of preventing the opening failure of the joint of the tie-rubber sheet. Setting the circumferential length (L) of the auxiliary rubber sheet at 20 mm or less makes it possible to suppress an increase in weight of the tire.

The rubber composition constituting the auxiliary rubber sheet may be the same as or different from that of the tie-rubber sheet, and is not particularly limited as long as being any of those conventionally used as tire materials. For example, the rubber composition used for the auxiliary rubber sheet may be one formed by adding a compounding ingredient such as carbon black, a process oil, or a curing agent to a diene rubber, such as NR, IR, BR, or SBR; an ethylene-propylene copolymer rubber; styrene elastomer; or the like.

The rubber composition constituting the auxiliary rubber sheet preferably includes short fibers, which can enhance the effect of reinforcing the joint of the tie-rubber sheet. The amount of short fibers to be compounded is preferably in a range from 0.1 to 2.0 parts by weight per 100 parts by weight of the rubber component. Setting the amount of short fibers to be compounded in such range makes it possible to further enhance the reinforcement of the interface of the joint. The kind of short fibers is not particularly limited, and at least one of organic fibers and inorganic fibers may be used.

The thermoplastic resin film is preferably a single-layer or multi-layer cylindrical thermoplastic resin film prepared from a thermoplastic resin composition by a general extrusion molding, for example, by an inflation molding. The resin for the thermoplastic resin film is not particularly limited as long as can be subjected to a melt molding. The thermoplastic resin film is preferably made of, for example, a thermoplastic resin, such as a polyamide resin, a polyester resin, a polynitrile resin, a polymethacrylate resin, or a polyvinyl resin; a copolymer composed mainly of one of those resins; or a resin composition containing one of these resin components as a main component. The resin composition is preferably a thermoplastic resin composition containing one of the above thermoplastic resins as a matrix and any elastomer component as a domain. Such elastomer is preferably an olefin elastomer, a styrene elastomer, or the like.

The method of producing a pneumatic tire according to the present invention exhibits its effects particularly in the production of a heavy-duty tire that requires a thick tie-rubber sheet. The method according to the present invention makes it possible to join both end portions of the tie-rubber sheet to each other by the butt-splicing method which has heretofore not been able to be employed, and is useful for a prevention of an opening failure of a butting portion and for a reduction of blisters.

Hereinafter, the present invention will be described by giving examples; however, the scope of the present invention is not limited by these examples.

### EXAMPLES

### Examples 1 and 2

Four types of green tires (Examples 1 and 2, Conventional Example, and Comparative Example) each having a tire size of 11R22.5 and a tire structure shown in Fig. 1 were formed. Specifically, 10 green tires of each type were formed, each by using a cylindrical thermoplastic resin film (having a 0.2 mm thickness) as an air permeation prevention layer, by winding a tie-rubber sheet having a 2. 0 mm thickness and a carcass layer thereon, and by performing a splicing process. Moreover, these four types were formed to be different from one another, as shown in Table 1, in the splicing method performed on the foregoing tie-rubber sheet, the presence or absence of an auxiliary rubber sheet, and the thickness (tm) and the circumferential length (L) of the auxiliary rubber sheet.

The same rubber composition as that of the tie-rubber sheet was used for constituting the auxiliary rubber sheet. The rubber composition used in Example 2 was one in which 1.0 part by weight of vinylon short fiber is compounded per 100 parts by weight of the rubber component.

Each of the green tires of these four types was cured. Then, the weight of the tire, as well as, blisters, whether or not the tie-rubber sheet was opened, a variation in liner gauge, and the uniformity, after the curing process, were evaluated by the following methods.

### [Blisters]

Whether or not blisters had occurred was visually checked in the inner surface of a pneumatic tire obtained by curing the green tire of each type.

### [Opening of Tie-rubber Sheet]

A pneumatic tire obtained by curing the green tire of each type was disassembled, and whether or not an opening had occurred at the joint in the spliced portion of the tie-rubber sheet was visually checked.

### [Variation in Liner Gauge]

A pneumatic tire obtained by curing the green tire of each type was disassembled, and the thickness of a thinned part of the thermoplastic resin film in a vicinity of the spliced portion of the tie-rubber sheet was measured. Then, the pneumatic tires were evaluated by indices where the thickness of the thermoplastic resin film in a region having a uniform thickness was taken as 100. The closer to 100 the index is, the smaller the variation in liner gauge is.

### [Uniformity]

The RFV of the pneumatic tire obtained by curing the green tire of each type was measured according to JASO C607. Then, the pneumatic tires were evaluated by indices where the measured value of the tire of Conventional Example was taken as 100. The smaller the index is, the more excellent the pneumatic tire is in the uniformity.

**[Table 1]**

| | Conventional Example | Comparative Example | Example 1 | Example 2 |
|---|---|---|---|---|
| Splicing Method Performed on Tie-rubber Sheet | Lap-splicing | Butt-splicing | Butt-splicing | Butt-splicing |
| Thickness (tm) of Auxiliary Rubber Sheet [mm] | - | - | 0.4 | 0.2 |
| Circumferential Length (L) of Auxiliary Rubber Sheet [mm] | - | - | 20 | 10 |
| Weight of Tire [kg] | 54.80 | 54.60 | 54.70 | 54.65 |
| Blisters | Present | Present | Absent | Absent |
| Opening Failure | Absent | Present | Absent | Absent |
| Variation in Liner Gauge [%] | 80 | Incapable of Measurement | 97 | 98 |
| Uniformity (RFV) [Index] | 100 | Incapable of Measurement | 99 | 98 |

The pneumatic tire of Comparative Example was not able to be evaluated in the variation in liner gauge because an opening had occurred at the joint of the tie-rubber sheet during the curing process.

## Claims

1. A method of producing a pneumatic tire comprising:
wrapping a thermoplastic resin film (6) around a making drum (20);
winding an unvulcanized tie-rubber sheet (7) on the thermoplastic resin film (6);
splicing a winding start portion (7a) and a winding end portion (7b) of the tie-rubber sheet (7) with each other; and thereafter
winding a carcass layer (5) on the tie-rubber sheet (7), **characterized in that**
a splice of the tie-rubber sheet (7) is made to be a butt-splice,
an unvulcanized auxiliary rubber sheet (9) is interposed between the tie-rubber sheet (7) and the thermoplastic resin film (6), along a joint (7c) of the butt-splice, and
a thickness (tg) of the tie-rubber sheet (7) is in a range from 1.0 mm to 4.0 mm.

2. The method of producing a pneumatic tire according to claim 1, wherein a thickness (tm) of the auxiliary rubber sheet (9) is in a range from 0.1 mm to 0.5 mm.

3. The method of producing a pneumatic tire according to claim 1 or 2, wherein a circumferential length (L) of the auxiliary rubber sheet (9) is in a range from 10 mm to 20 mm.

4. The method of producing a pneumatic tire according to any one of claims 1 to 3, wherein the auxiliary rubber sheet (9) is formed of a rubber composition having short fiber compounded therein.

5. The method of producing a pneumatic tire according to claim 4, wherein the rubber composition is a composition in which 0.1 to 2.0 parts by weight of the short fiber is compounded per 100 parts by weight of a rubber component.

6. The method of producing a pneumatic tire according to any one of claims 1 to 5, wherein stitching is performed on a butt-spliced portion of the tie-rubber sheet (7).

## Patentansprüche

1. Verfahren zum Herstellen eine Luftreifens mit:
dem Wickeln eines thermoplastischen Harzfilms (6) um eine Herstelltrommel (20);
dem Winden einer unvulkanisierten Verbindungsgummifolie (7) auf den thermoplastischen Harzfilm (6);
dem Verspleißen eines Windungsanfangsabschnitts (7a) und eines Windungsendabschnitts (7b) der Verbindungsgummifolie (7) miteinander; und anschließend
dem Winden einer Karkassenschicht (5) auf die Verbindungsgummifolie (7), **dadurch gekennzeichnet, dass**
ein Spleiß der Verbindungsgummifolie (7) als Stoßspleiß hergestellt wird,
eine unvulkanisierte Hilfsgummifolie (9) zwischen die Verbindungsgummifolie (7) und den thermoplastischen Harzfilm (6) entlang einer Verbindung (7c) des Stoßspleißes eingefügt wird, und
eine Dicke (tg) der Verbindungsgummifolie (7) zwischen 1,0 mm und 4,0 mm liegt.

2. Verfahren zum Herstellen eines Luftreifens nach Anspruch 1, bei dem eine Dicke (tm) der Hilfsgummifolie (9) zwischen 0,1 mm und 0,5 mm liegt.

3. Verfahren zum Herstellen eines Luftreifens nach Anspruch 1 oder 2, bei dem eine Umfangslänge (L) der Hilfsgummifolie (9) zwischen 10 mm und 20 mm liegt.

4. Verfahren zum Herstellen eines Luftreifens nach einem der Ansprüche 1 bis 3, bei dem die Hilfsgummifolie (9) aus einer Gummimischung ausgebildet ist, der kurze Fasern beigemischt sind.

5. Verfahren zum Herstellen eines Luftreifens nach Anspruch 4, bei dem die Gummimischung eine Mischung ist, bei der 0,1 bis 2,0 Gewichtsteile kurze Fasern 100 Gewichtsteilen Gummikomponente beigemischt sind.

6. Verfahren zum Herstellen eines Luftreifens nach einem der Ansprüche 1 bis 5, bei dem ein Vernähen auf einem stoßversplissenen Abschnitt der Verbindungsgummifolie (7) ausgeführt wird.

## Revendications

1. Procédé de production d'un bandage pneumatique comprenant :
l'enveloppement d'un film de résine thermoplastique (6) autour d'un tambour de fabrication (20) ;
l'enroulement d'une feuille de caoutchouc de liaison non vulcanisé (7) sur le film de résine thermoplastique (6) ;
l'épissage d'une partie de début d'enroulement (7a) et d'une partie de fin d'enroulement (7b) de la feuille de caoutchouc de liaison (7) l'une avec l'autre ; et après cela
l'enroulement d'une couche de carcasse (5) sur la feuille de caoutchouc de liaison (7), **caractérisé en ce que**
une épissure de la feuille de caoutchouc de liaison (7) est faite pour être une épissure en about,
une feuille de caoutchouc auxiliaire non vulcanisé (9) est interposée entre la feuille de caoutchouc de liaison (7) et le film de résine thermoplastique (6), le long d'un joint (7c) de l'épissure en about, et
une épaisseur (tg) de la feuille en caoutchouc de liaison (7) est dans une plage allant de 1,0 mm à 4,0 mm.

2. Procédé de production d'un bandage pneumatique selon la revendication 1, dans lequel une épaisseur (tm) de la feuille de caoutchouc auxiliaire (9) est dans une plage allant de 0,1 mm à 0,5 mm.

3. Procédé de production d'un bandage pneumatique selon la revendication 1 ou 2, dans lequel une longueur circonférentielle (L) de la feuille de caoutchouc auxiliaire (9) est dans une plage allant de 10 mm à 20 mm.

4. Procédé de production d'un bandage pneumatique selon l'une quelconque des revendications 1 à 3, dans lequel la feuille de caoutchouc auxiliaire (9) est formée d'une composition de caoutchouc ayant une fibre courte composée en son sein.

5. Procédé de production d'un bandage pneumatique selon la revendication 4, dans lequel la composition de caoutchouc est une composition dans laquelle 0,1 à 2,0 parties en poids de la fibre courte est composée par 100 parties en poids d'un composant de caoutchouc.

6. Procédé de production d'un bandage pneumatique selon l'une quelconque des revendications 1 à 5, dans lequel une couture est effectuée sur une partie épissée en bout de la feuille de caoutchouc de liaison (7).
